# EUROPEAN PATENT SPECIFICATION

(11) **EP 3 998 615 B1**
(45) Date of publication and mention of the grant of the patent: **27.08.2025**
(21) Application number: 19932722.2
(22) Date of filing: 29.11.2019
(51) Int. Cl.: G21C 13/02, G21C 9/004, G21C 9/06, G21D 1/02, G21D 3/04, G21F 9/02

(54) **NUCLEAR POWER PLANT CONTAINMENT FILTERING AND DISCHARGING SYSTEM AND METHOD**
SYSTEM UND VERFAHREN ZUR FILTRIERUNG UND ENTLADUNG EINES KERNKRAFTWERKSICHERHEITSBEHÄLTERS
SYSTÈME ET PROCÉDÉ DE FILTRATION ET D'ÉVACUATION POUR CONFINEMENT DE CENTRALE NUCLÉAIRE

(30) Priority: 12.06.2019 CN 201910506302
(43) Date of publication of application: 18.05.2022
(73) Proprietor: China Nuclear Power Engineering Co., Ltd., Shenzhen, Guangdong 518124 (CN); China Nuclear Power Design Company Ltd. (Shenzhen), Shenzhen, Guangdong 518100 (CN); China General Nuclear Power Corporation, Shenzhen, Guangdong 518026 (CN); CGN Power Co., Ltd., Shenzhen, Guangdong 518026 (CN)
(72) Inventor: BAO, Qingbo, Shenzhen, Guangdong 518100 (CN); ZHOU, Shaofei, Shenzhen, Guangdong 518100 (CN); HU, Jian, Shenzhen, Guangdong 518100 (CN); PENG, Yue, Shenzhen, Guangdong 518100 (CN)
(74) Representative: Greaves Brewster LLP
(86) International application number: PCT/CN2019/121835
(87) International publication number: WO 2020/248530

(56) References cited:
- WO-A1-2016/143764
- CN-A- 102 723 114
- CN-A- 102 723 114
- CN-A- 104 409 112
- CN-A- 104 505 131
- CN-A- 107 240 425
- CN-A- 108 062 984
- CN-A- 110 364 275
- CN-U- 204 407 019
- CN-U- 204 407 019
- JP-A- 2016 186 427

## Description

### FIELD OF THE INVENTION

The present invention generally relates to nuclear power plants and, more particularly, relates to a nuclear power plant containment filtering and discharging system and method.

### BACKGROUND OF THE INVENTION

As required, the containment design must practically eliminate the possibility of nuclear power plant conditions that lead to early radioactive releases or large radioactive releases. After serious accident in a nuclear power plant reactor, melting of the core will lead to continuous accumulation of a large amount of steam and non-condensable gas in the containment, which seriously affects the integrity of the containment. Therefore, it is necessary to discharge the gases out of the containment by means of active pressure relief, so that the pressure inside the containment does not exceed the load-bearing limit, thereby ensuring the integrity of the containment. At the same time, to prevent the unacceptable radioactive hazard consequences of the gas discharged from the containment to the environment, it is necessary to set up a filtering device on the pressure relief pipeline to filter and retain the radioactive substances in the discharged gas, so that the amount of the radioactive material inevitably released into the environment can be kept as low as possible, to ensure the environmental safety. Therefore, it is of practical significance to select a high-efficiency containment filtering and discharging system to eliminate the risk of overpressure in the containment and to avoid the release of uncontrollable radioactive substances.

At present, most of the pressurized water reactor nuclear power plants have been equipped with a post-serious accident containment filtering and discharging system, to ensure the integrity of the containment and prevent the large-scale release of radioactive substances due to overpressure of the containment, including dry filtration (absorptive filtration outside the containment) and wet filtration (combination of venturi wash filtration outside the containment and metal fiber filtration).

Dry filtration mainly provides a pressure water reactor nuclear power plant filtrating and discharging retention device which can pre-filter metal fiber dust and aerosol inside the containment, and adsorb and filter iodine outside the containment. When the containment is overpressured after a serious accident, a metal fiber pre-filter preliminarily filter in the containment filters the aerosols, to reduce the dust holding capacity of the filtered exhaust gas and aerosols with large particle size. The radioactive particles in the discharged gas are absorbed and retained via dry iodine adsorption device outside the containment. Controlled pressure relief mode is used to keep the pressure inside the containment within the load-bearing limit, so as to maintain the integrity of the containment. The previously described technical solution has high requirements on the adsorbent materials, and the device is bulky and tends to cause the decay heat accumulation of the retained substances in the filtering device, resulting in equipment burnout and radioactive leakage. More importantly, the previously described technical solution is difficult to avoid the risk of hydrogen explosion due to local hydrogen aggregation in the device.

Wet filtration mainly provides a passive pressure water reactor nuclear power plant filtering and discharging retention device with water washing retention and mechanical filtration functions. When the containment is overpressured after a serious accident, the solution in the venturi scrubber outside the containment is used to retain elemental iodine, dissolved aerosol and dissolved organic iodine in the discharged gas, while retain tiny aerosol particles of different sizes via a second-stage metal fiber filter, to implement a passive controlled pressure relief mode, so as to keep the pressure inside the containment within the bearing limit and maintain the integrity of the containment. The previously described solution is difficult to avoid the risk of hydrogen explosion caused by local accumulation of hydrogen in the device.

Therefore, in order to solve the risk of hydrogen combustion and hydrogen explosion when the containment filtering and discharging system is put into operation after a serious accident in a nuclear power plant, what is needed therefore, is to provide a nuclear power plant containment filtering and discharging system and method having a hydrogen recombination unit, so as to avoid hydrogen explosion during discharge.

CN204407019U relates to a safety system field of a nuclear power plant, in particular to a pressure relief system for preventing overpressure of a safety shell of a nuclear power plant under an accident condition, reducing the release of radioactive substances to the environment and preventing hydrogen explosion.

### SUMMARY OF THE INVENTION

The present invention relates to a nuclear power plant containment filtering and discharging system as defined in claim 1. Preferred features of the invention are set out in the dependent claims.

One object of the present invention is to provide a nuclear power plant containment filtering and discharging system and method having a hydrogen recombination unit, which can avoid hydrogen combustion and hydrogen explosion when the containment filtering and discharging system is put into operation after a serious accident in a nuclear power plant.

According to one embodiment of the present invention, a nuclear power plant containment filtering and discharging system having a hydrogen recombination unit, configured to filter discharged gas from a containment in serious accident, includes: a discharging pipeline assembly, and a first-stage filtering unit and a second-stage filtering unit provided on the discharging pipeline assembly; wherein one end of the discharging pipeline assembly is connected to the containment for controllably conveying discharged gas in the containment to the first-stage filtering unit; the first-stage filtering unit is configured for carrying out water washing filtration on the discharged gas, and carrying out hydrogen removal on the discharged gas subjected to the water washing filtration; the second-stage filtering unit is connected in series to the first-stage filtering unit for carrying out methyl iodide filtration on the discharged gas subjected to the hydrogen removal, and discharging the filtered discharged gas which meets the requirements to the atmosphere.

According to one aspect of the present invention, the discharging pipeline assembly includes a first electric containment isolation valve and a second electric containment isolation valve provided on the discharging pipeline assembly in series. The containment filtering and discharging system further includes a control unit connected to the first electric containment isolation valve and the second electric containment isolation valve. The control unit is configured to remotely control opening and closing of the first electric containment isolation valve and the second electric containment isolation valve in serious accident, according to the comprehensive evaluation results of the containment.

According to one aspect of the present invention, the containment filtering and discharging system further includes a waste liquid reflux pipeline connecting the discharging pipeline assembly and the first-stage filtering unit. The waste liquid reflux pipeline is provided with a waste liquid reflux isolation valve configured to control opening and closing of the waste liquid reflux isolation valve under pressure equilibrium conditions, so that the waste liquid flows back to the containment through the waste liquid reflux pipeline due to gravity.

According to one aspect of the present invention, the first-stage filtration unit includes: a water washing filtration unit, a hydrogen recombination unit, and a first-stage filtering container for accommodating the water washing filtration unit and the hydrogen recombination unit. The water washing filtration unit is disposed at bottom of the first-stage filtering container and includes water washing solution and venturi nozzles immersed in the water washing solution. An input end of the venturi nozzle passes through the first-stage filtering container and connects to an output end of the discharging pipeline assembly via a flange, to convey the gas discharged from the containment to the water washing solution. The water washing solution is configured to retain the aerosols and the radionuclide in the gas discharged from the containment. The hydrogen recombination unit is arranged on top of the first-stage filtering container and includes a baffle plate and a catalyst covered on the baffle plate, to eliminate the hydrogen in the gas discharged from the containment subjected to the water washing with the water washing solution.

According to one aspect of the present invention, the second-stage filtering unit is an AgX passive dry filter arranged downstream of the hydrogen recombination unit and configured to retain methyl iodide in the gas discharged from the containment.

According to one aspect of the present invention, the containment filtration and discharge system further includes a liquid replenishment loop connected to the waste liquid reflux pipeline. The liquid replenishment loop includes a first check valve, a first fluid replenishment isolation valve and a first quick connector. The first check valve and the first fluid replenishment isolation valve are connected to a lowest water level detector installed on the first-stage filtering container. When the lowest water level detector detects the water level of the water washing solution is lower than a preset lowest water level, the first check valve and the first fluid replenishment isolation valve are opened. The first quick connector is connected to a chemical dosing device and the first-stage filtering container is replenished via the waste liquid reflux pipeline, to ensure the filtering function of the containment filtering and discharging system.

According to one aspect of the present invention, the first check valve and the first liquid replenishment isolation valve are connected to a drug content detector disposed on the first-stage filtering container. When the drug content detector detects the drug content of the water washing solution is lower than a preset minimum drug content level, the drug content of the liquid in the chemical dosing device is reconfigured, the first check valve and the first liquid replenishment isolation valve are opened, and the first quick connector is connected to the chemical dosing device. The reconstituted liquid is supplemented to the first-stage filtering container via the waste liquid reflux pipeline, to ensure the filtration function of the containment filtering and discharging system.

According to one aspect of the present invention, the containment filtering and discharging system further includes a hydrophobic loop connected to the waste liquid reflux pipeline. The hydrophobic loop is provided with a first hydrophobic isolation valve, a second hydrophobic isolation valve and a second quick connector. The first hydrophobic isolation valve and the second hydrophobic isolation valve are connected to a highest water level detector arranged on the first-stage filtering container. When the highest water level detector detects that the water level of the water washing solution is higher than a preset maximum water level, the first hydrophobic isolation valve and the second hydrophobic isolation valve are opened, and the second quick connector is connected to an external container. The waste liquid is discharged to the external container through the hydrophobic loop, to ensure the filtering function of the containment filtering and discharging system.

According to one aspect of the present invention, the containment filtering and discharging system further includes an orifice plate arranged on the discharge pipeline assembly and located downstream of the AgX passive dry filter, a bursting membrane, a connecting element, a radiation monitor and a chimney. The orifice plate is configured to ensure that the containment filtering and discharging system operates in a sliding pressure mode. The bursting membrane is configured to rupture when the system pressure reaches a preset value, so that the discharged gas from the containment can be released. The big and small head has a large head end and a small head end. The small head end is connected with the bursting membrane, and the big head end is connected with an input end of the radiation monitor, so as to reduce the gas flow rate at the big head end and reduce the noise. The input end of the radiation monitor is connected to the big head end, and the output end is connected to the control unit, to monitor the radioactivity of the gas discharged by the big head end in real time, and generate the radioactivity monitoring result of the discharged gas. If the radioactivity monitoring results of the discharged gas meets the atmospheric emission requirements, the discharged gas will be discharged to the atmosphere via the chimney. If the radioactivity monitoring results of the discharged gas fails to meet the atmospheric emission requirements, the control unit sends an instruction to close the first electric containment isolation valve and the second electric containment isolation valve.

According to one aspect of the present invention, the containment filtering and discharging system further includes a nitrogen unit connected to the first-stage filtering container. The nitrogen unit includes a nitrogen loop, and a nitrogen cylinder arranged on the nitrogen loop, a nitrogen isolation valve and a nitrogen check valve. The nitrogen isolation valve is connected to a pressure detector inside the first-stage filtering container. When the pressure detector detects that the pressure in the first-stage filtering container is lower than a preset minimum pressure during the system standby period, the nitrogen isolation valve and the nitrogen check valve are opened, to fill the first-stage filtering container with nitrogen for maintenance.

According to one aspect of the present invention, the containment filtering and discharging system further includes a balance valve arranged on the discharge pipeline assembly. An input end of the balance valve is connected with the output end of the AgX passive dry filter. An output end of the balance valve is connected with the input end of the orifice plate, to close the balance valve when the containment filtering and discharging system needs to be overhauled and prevent the gas discharged from the containment from being discharged into the atmosphere.

According to one aspect of the present invention, the containment filtering and discharging system further includes a safety valve connected to two ends of the balance valve, and the safety valve is connected to a pressure detector disposed inside the first-stage filtering container. When the pressure detector detects that the pressure in the first-stage filtering container exceeds a preset maximum pressure, the safety valve jumps to release the pressure and ensure the safety of the containment filtering and discharging system.

According to a second embodiment of the present invention, a nuclear power plant containment filtering and discharging method having a hydrogen recombination unit includes the steps of:
controllably conveying the gas discharged from the containment to the first-stage filtering unit through the discharging pipeline assembly;
carrying out water washing filtration on the discharged gas in the first-stage filtering unit and carrying out hydrogen removal on the discharged gas subjected to the water washing filtration; and
carrying out methyl iodide filtration on the discharged gas subjected to the hydrogen removal in the second-stage filtering unit, and discharging the filtered discharged gas which meets the requirements to the atmosphere.

To solve the technical problem of hydrogen combustion and hydrogen explosion risks in the prior art when the containment filtering and discharging system is put into operation after a serious accident, the present invention provides a nuclear power plant containment filtering and discharging system and method having a hydrogen recombination unit. The nuclear power plant containment filtering and discharging system has a series structure, wherein the first-stage filtering container adopts water washing filtration and condensate reflux, and the passive baffle plate catalyzed hydrogen recombination unit is placed on the top of the first-stage filtering container, which can effectively eliminate the hydrogen during filtration and discharge process, and ensure the effective retention and blocking of the filtered and discharged gas before being discharged to the atmospheric environment, thereby improving the safety of the filtration and discharge process. The present invention adopts passive hydrogen elimination and passive filtering and discharging, and the filtering and discharging system can operates more safely under high pressure.

### BRIEF DESCRIPTION OF THE DRAWINGS

Fig. 1 shows a simplified block diagram of a nuclear power plant containment filtering and discharging system having a hydrogen recombination unit according to a first embodiment of the present invention;
Fig.2 shows a schematic structural diagram of a nuclear power plant containment filtering and discharging system having a hydrogen recombination unit according to the first embodiment of the present invention; and
Fig. 3 shows a flow chart of a nuclear power plant containment filtering and discharging method having a hydrogen recombination unit according to a second embodiment of the present invention.

### DETAILED DESCRIPTION OF THE INVENTION

To solve the technical problems of safety and reliability of the nuclear power plant containment filtering and discharging system after a serious accident, the present invention aims to provide a nuclear power plant containment filtering and discharging system having a hydrogen recombination unit. The nuclear power plant containment filtering and discharging system has a series structure, wherein the first-stage filtering container adopts water washing filtration and condensate reflux, and the passive baffle plate catalyzed hydrogen recombination unit is placed on the top of the first-stage filtering container, which can effectively eliminate the hydrogen during filtration and discharge process, and ensure the effective retention and blocking of the filtered and discharged gas before being discharged to the atmospheric environment, thereby improving the safety of the filtration and discharge process.

In order to make the objects, technical solutions and advantages of the present invention clearer, the embodiments of the present invention will be described in detail below in view of the accompanying drawings.

### First Embodiment

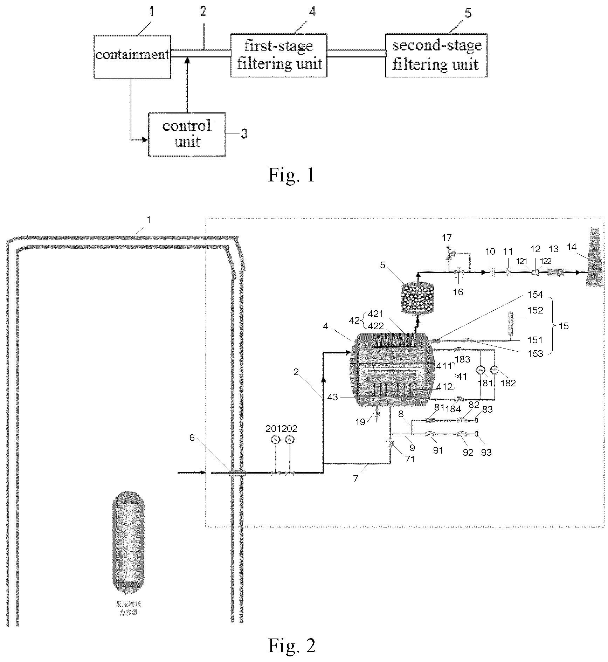

Referring to Fig. 1, the first embodiment of the present invention provides a nuclear power plant containment filtering and discharging system having a hydrogen recombination unit, which is configured to filter the discharged gas from the containment 1 after a serious accident. The nuclear power plant containment filtering and discharging system includes a discharging pipeline assembly 2, a first-stage filtering unit 4 and a second-stage filtering unit 5 provided on the discharging pipeline assembly 2, and a control unit 3 connected with the discharging pipeline assembly 2. The input end of the discharging pipeline assembly 2 is connected to the containment 1, to controllably convey the discharged gas in the containment 1 to the first-stage filtering unit 4 through the control unit 3 according to the comprehensive evaluation result of the containment 1 after a serious accident, so that the pressure inside the containment 1 is kept within the bearing limit of the containment 1, thereby ensuring the integrity of the containment 1.

Specifically, the first-stage filtering unit 4 is arranged on the discharge pipeline assembly 2 for carrying out water washing filtration on the discharged gas, and carrying out hydrogen removal on the discharged gas subjected to the water washing filtration, so as to retain aerosols, radioactive substances and hydrogen carried in the exhaust gas. The second-stage filtering unit 5 is connected in series with the first-stage filtering unit 4, to carry out methyl iodide filtration on the discharged gas subjected to the hydrogen removal, and discharge the filtered discharged gas which meets the requirements to atmosphere. The first-stage filtering unit 4 and the second-stage filtering unit 5 can filter and retain the radioactive substances in the discharged gas, so that the radioactive substances inevitably released into the environment can be maintained at a level as low as possible, thereby ensuring environmental friendliness and dose safety for the public.

Referring to Fig. 2, the input end of the discharging pipeline assembly 2 is connected to the containment 1 through a containment penetration piece 6, and the discharging pipeline assembly 2 includes a first electric containment isolation valve 201 and a second electric containment isolation valve 201 on the discharging pipeline assembly 2 in series. The first electric containment isolation valve 201 and the second electric containment isolation valve 202 are connected to a control unit 3, to remotely control the opening and closing of the first electric containment isolation valve 201 and the second electric containment isolation valve 202 according to comprehensive evaluation result of the containment 1 in the event of a serious accident, so as to avoid the problem that the remote transmission drive device of the manual remote transmission operation valve fails to have desirable seismic performance, increase reliability, avoid the dose risk of operators, and reduce the design and construction cost of the shielding walls.

The first-stage filtering unit 4 includes a water washing filtration unit 41, a hydrogen recombination unit 42, and a first-stage filtering container 43 accommodating the water washing filtration unit 41 and the hydrogen recombination unit 42. The water washing filtration unit 41 is arranged at the bottom of the first-stage filtering container 43 and includes a water washing solution 411 and venturi nozzles 412 immersed in the water washing solution 411. The input end of the venturi nozzle 412 passes through the first-stage filtering container 43 and is connected to the discharging pipeline assembly 2 via a flange, to convey the discharged gas to the water washing solution 411. The venturi nozzles 412 can spray the discharged gas into the water washing solution 411 at a high speed to form extremely fine bubbles which contain and retain fine aerosol particles, thereby achieving the effect of filtering and retaining aerosol. The washing solution 411 is used to retain the aerosols and radionuclide carried in the discharged gas. The water washing solution 411 contains sodium hydroxide NaOH and sodium thiosulfate Na₂S₂O₃, and Na₂S₂O₃ can chemically react with the highly volatile iodine in the discharged gas, and form non-volatile iodide, to retain most of the iodine in the chemical solution. Due to the alkaline solution formed by NaOH, the adsorption of iodine by Na₂S₂O₃ is strengthened.

The hydrogen recombination unit 42 is arranged on the top of the first-stage filtering container 43 and includes a baffle plate 421 and a catalyst 422 covered on the baffle plate 421, to eliminate the hydrogen carried in the discharged gas washed by the water washing solution 411. The specific process of eliminating hydrogen is detailed as following. The hydrogen carried in the discharged gas reaches the surface of the baffle plate 421, and chemically reacts with the oxygen contained in the first-stage filtering container 43 under the catalytic action of the catalyst 422, to achieve the purpose of eliminating hydrogen. It should be noticed that, when hydrogen react chemically with oxygen, the heat of reaction will heat and push the local air near the catalytic surface. The hot air is lifted upwardly due to the density change, and the local space left after the heated air is lifted is supplemented by the lower cold air, to form a local gas natural diffusion cycle. The hydrogen elimination process can continue to achieve the purpose of passive hydrogen elimination. At the same time, the product of the hydrogen and oxygen reaction is water, which will flow back to the water washing solution 411 due to the gravity. Further, the use of the baffle plate 421 can effectively reduce the gas flow velocity of the gas passing through the surface of the catalytic plate, increase the relative area of the gas flow in contact with the catalytic plate, and achieve effective hydrogen elimination in the process of filtering and discharging.

The second-stage filtering unit 5 is an AgX passive dry filter, which is arranged downstream of the hydrogen recombination unit 42 and is used for retaining methyl iodide carried in the discharged gas after the hydrogen removal. AgX is very effective in filtering methyl iodide, which further reduces the radioactive harm of the discharged gas to the environment. Specifically, when AgX contacts the gas carrying methyl iodide, it will immediately generate chemically stable silver iodide, which effectively improves the retention efficiency of methyl iodide.

The nuclear power plant containment filtering and discharging system also includes a waste liquid reflux pipeline 7 connecting the discharging pipeline assembly 2 and the first-stage filtering unit 3 and a waste liquid reflux isolation valve 71 arranged on the waste liquid reflux pipeline 7. The waste liquid reflux pipeline 7 is used to convey the water washing solution 411 back into the containment 1 through the discharge pipeline assembly 2. The waste liquid reflux isolation valve 71 is used to control the opening and closing of the waste liquid reflux pipeline 7. The arrangement of the waste liquid reflux pipeline 7 avoids the risk of contaminant leakage caused by the long-term storage of radioactive waste liquid outside the containment 1. It can be seen from Fig. 2 that the height of the first-stage filtering container 43 is higher than that of the containment 1. Therefore, the waste liquid can be returned to the containment 1 due to gravity. There is no need to add additional power devices to realize passive flow back of the waste liquid, thereby simplifying the device and reducing the cost.

The nuclear power plant containment filtering and discharging system also includes a liquid replenishment loop 8 connected to the waste liquid reflux pipeline 7. The liquid replenishment loop 8 is provided with a first check valve 81, a first liquid replenishment isolation valve 82 and a first quick connector 83. The first check valve 81 and the first liquid replenishment isolation valve 82 cooperate with the lowest water level detector 181 arranged on the first-stage filtering container 43, to open the first check valve 81 and the first liquid replenishment isolation valve 82 and connect the first quick connector 83 to the chemical dosing device (not shown) through the waste liquid reflux pipeline 7 to supply liquid to the first-stage filtering container 43 when the lowest water level isolation valve 184 is opened, and the lowest water level detector 181 detects the water level of the washing solution 411 is lower than the preset minimum water level , to ensure the filtering function of the containment filter discharge system. The first check valve 81 can prevent the waste liquid from flowing back to the chemical dosing device, causing the liquid in the chemical dosing device to be polluted.

The first check valve 81 and the first fluid replenishment isolation valve 82 also cooperate with the drug content detector interface isolation valve 19 arranged on the first-stage filtering container 43, to reconstitute the drug content of the liquid in the chemical dosing device, open the first check valve 81 and the first liquid replenishment isolation valve 82, and connect the first quick connector 83 to the chemical dosing device to replenish the reconstituted liquid to the first-stage filtering container 43 through the waste liquid reflux pipeline 7, when the drug content detector detects the drug content in the water washing solution 411 is lower than the preset minimum drug content level. It should be noted that, when the drug content detector detects that the drug content of the water washing solution 411 is lower than the preset minimum drug content level, the operator reformulates the concentration of the liquid chemical substance in the chemical dosing device, so that after being added to the first-stage filtering container 43, the drug content in the water washing solution 411 meets the filtration requirements of the containment filtering and discharging system, thereby ensuring the filtration function of the containment filtering and discharging system.

The nuclear power plant containment filtering and discharging system also includes a hydrophobic loop 9 connected to the waste liquid reflux pipeline 7. The hydrophobic loop 9 is provided with a first hydrophobic isolation valve 91, a second hydrophobic isolation valve 92 and a second quick connector 93. The first hydrophobic isolation valve 91 and the second hydrophobic isolation valve 92 cooperate with the highest water level detector 182 arranged on the first-stage filtering container 43 to open the first hydrophobic isolation valve 91, the second hydrophobic isolation valve 92, and connect the second quick connector 93 to the external container when the highest water level isolation valve 183 is opened and the highest water level detector 182 detects the water level of the washing solution 411 is higher than the preset maximum water level, discharge the waste liquid to the external container through the hydrophobic loop 9 to ensure the filtering function of the containment filtering and discharging system.

According to one embodiment of the present invention, the hydrophobic loop 9 is also used to open the first hydrophobic isolation valve 91 and the second hydrophobic isolation valve 92, and close the waste liquid reflux isolation valve 71 when the containment filtering and discharging system needs to be repaired, so that the water washing solution 411 is discharged to an external container for convenient and quick maintenance. The purpose of setting two hydrophobic isolation valves is to prevent the failure of one hydrophobic isolation valve, causing the containment filtering and discharging system to fail to operate normally, and to improve the safety of the containment filtering and discharging system.

The nuclear power plant containment filtering and discharging system also includes an orifice plate 10, a bursting membrane 11, a connecting element 12, a radiation monitor 13 and a chimney 14 that is sequentially arranged on the discharge pipeline assembly 2 and located downstream of the AgX passive dry filter. The input end of the orifice plate 10 is connected to the output end of the AgX passive dry filter, to ensure that the containment filtering and discharging system operates in a sliding pressure mode and to ensure the safety of the operation of the containment filtering and discharging system. The input end of the bursting membrane 11 is connected to the output end of the orifice plate 10, so that the bursting membrane 11 is ruptured and the exhaust gas is released when the pressure of the containment filtering and discharging system reaches a preset value. The connecting element 12 has a big head end 122 and a small head end 121, the small head end 121 is connected to the input end of the radiation monitor 13, which is used to reduce the gas flow rate of the big head end 122 and reduce the noise. The input end of the radiation monitor 13 is connected to the big head end 122, and the output end of the radiation monitor 13 is connected to the control unit 3, which is used for real-time monitoring the radioactivity of the output gas at the big head end 122 and generation of the radioactivity monitoring result of the discharged gas. If the radioactivity monitoring result of the discharged gas meets the atmospheric emission requirements, the discharged gas is discharged to the atmosphere through the chimney 14. If the atmospheric emission requirements are not met, the control unit 3 issues an instruction to close the first electric containment isolation valve 201 and the second electric containment isolation valve 202.

In order to ensure the pressure of the containment filtering and discharging system under normal operating conditions, the containment filtering and discharging system also includes a nitrogen unit 15 connected to the first-stage filtering container 43. The nitrogen unit 15 includes a nitrogen loop 151, a nitrogen cylinder 152 arranged on the nitrogen loop 151, a nitrogen isolation valve 153 and a nitrogen check valve 154. The nitrogen isolation valve 153 is connected with a pressure detector arranged inside the first-stage filtering container 43, to open the nitrogen isolation valve 153 and the nitrogen check valve 154 to fill the first-stage filtering container 43 with nitrogen when the pressure detector detects the pressure in the first-stage filtering container 43 is lower than the preset minimum pressure. When the pressure in the containment filtering and discharging system reaches the normal value, the nitrogen isolation valve 153 and the nitrogen check valve 154 are closed, to stop inflation. The nitrogen check valve 154 is used to ensure that nitrogen can only flow to the first-stage filtering container 43 from the nitrogen cylinder 152, and cannot flow in the reverse direction, so as to prevent the discharged gas from entering the nitrogen cylinder 152.

The nuclear power plant containment filtering and discharging system also includes a balance valve 16 arranged on the discharge pipeline assembly 2. The input end of the balance valve 16 is connected with the output end of the AgX passive dry filter, and the output end of the balance valve 16 is connected with the input end of the orifice plate 10, to close the balance valve 16 when the containment filtering and discharging needs to be repaired to prevent the discharged gas from being released to the atmosphere.

The nuclear power plant containment filtering and discharging system further includes a safety valve 17 connected to two ends of the balance valve 16, and the safety valve 17 is connected to a pressure detector arranged inside the first-stage filtering container 43. When the pressure detector detects the pressure in the first-stage filtering container 43 exceeds the preset maximum pressure, the safety valve 17 jumps to release the pressure, so as to ensure the safety of the containment filtering and discharging system.

### Second Embodiment

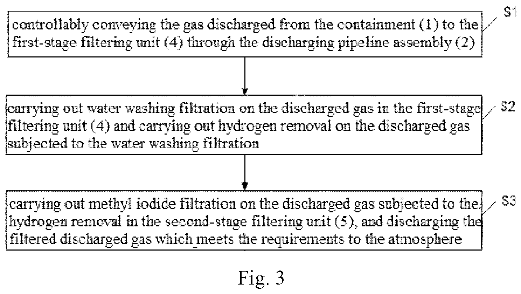

Referring to Fig. 3, the second embodiment of the present invention provides a nuclear power plant containment filtering and discharging method having a hydrogen compound unit, including the steps of:
Step S1, controllably conveying the gas discharged from the containment 1 to the first-stage filtering unit 4 through the discharging pipeline assembly 2, keeping the pressure in the containment 1 from exceeding the load-carrying limit to ensure the integrity of containment 1;
Step S2, carrying out water washing filtration on the discharged gas in the first-stage filtering unit 4 and carrying out hydrogen removal on the discharged gas subjected to the water washing filtration, to remove the aerosols, radionuclides and hydrogen carried in the gas discharged from the containment 1, to maintain the radioactive substances inevitably released into the environment as low as possible through the above-mentioned first-stage filtering unit 4, and avoid the risk of hydrogen explosion and hydrogen combustion in the wet filter device when the containment filtering and discharging is put into operation after a serious accident in the nuclear power plant;
Step S3, carrying out methyl iodide filtration on the discharged gas subjected to the hydrogen removal in the second-stage filtering unit 5, and discharging the filtered discharged gas which meets the requirements to the atmosphere, so that the radioactive substances inevitably released into the environment are maintained as low level as possible, to ensure environmental friendliness and a safe dose to the public.

One ordinary skilled in the art can understand that all or part of the steps for implementing the second embodiment of the present invention can be accomplished by hardware, or can be accomplished by instructing relevant hardware by a program, and the program can be stored in a computer-readable storage medium.

The present invention provides a nuclear power plant containment filtering and discharging method having a hydrogen recombination unit. The gas discharged from the containment is conveyed to the first-stage filtering unit through the discharge pipeline assembly to retain the aerosols, radionuclide and hydrogen carried in the gas discharged from the containment. Methyl iodide carried in the gas discharged from the containment is retained by the second-stage filtering unit. The gas discharged from the containment after being retained by the second-stage filter unit is conveyed to the chimney to discharge to the atmosphere through the discharge pipeline assembly, to solve the technical problems existing in the prior art, such as hydrogen combustion and hydrogen explosion risk when the containment filtering and discharging system is put into operation after a serious accident in a nuclear power plant. The first-stage filtering container adopts the structural design of the water washing filtration and chamber condensate reflux, and the hydrogen recombination unit having passive baffle plate and catalyst are placed on the top of the first-stage filtering container, so as to effectively eliminate the hydrogen during filtration and discharge, as well as ensure the effective retention and blocking of the filtered discharged gas before being discharged to the atmospheric environment, thereby improving the safety of the filtering and discharging process.

The present invention adopts the passive hydrogen elimination and passive filtering and discharging. There is no need to configure additional power supply, which can simplify layout requirements, stabilize hydrogen elimination ability, and reduce cost. A safety valve is provided to ensure safer operation of the containment filtering and discharging system under high pressure. A silver AgX dry filter device is used to effectively improve the retention efficiency of methyl iodide. A connecting element is used to reduce the outlet gas flow rate and reduce noise. The electric containment isolation valves are used to operate the valve, which can solve the problem that the remote transmission drive device of the manual remote transmission operation valve fails to have desirable seismic performance. The electric main control operation valve can effectively reduce the operating dose of on-site personnel and protect the personnel safety. The present invention improves the safety and comparable economy of the nuclear power plant and under the premise of ensuring a stable filtering and discharging strategy, the comprehensive performance is better.

The above described embodiments are only preferred embodiments of the present invention, and are not intended to limit the scope of the present invention, which is defined by the claims. Any modification, equivalent replacement and improvement within the scope of the present disclosure should be included in the protection scope of the present invention.

## Claims

1. A nuclear power plant containment filtering and discharging system, configured to filter discharged gas from a containment (1) in serious accident, the nuclear power plant containment filtering and discharging system comprising:
a containment (1), a discharging pipeline assembly (2), and a first-stage filtering unit (4) and a second-stage filtering unit (5) provided on the discharging pipeline assembly (2); wherein one end of the discharging pipeline assembly (2) is connected to the containment (1) for controllably conveying discharged gas in the containment (1) to the first-stage filtering unit (4); the first-stage filtering unit (4) is configured for carrying out water washing filtration on the discharged gas, and carrying out hydrogen removal on the discharged gas subjected to the water washing filtration; the second-stage filtering unit (5) is connected in series to the first-stage filtering unit (4) for carrying out methyl iodide filtration on the discharged gas subjected to the hydrogen removal, and discharging the filtered discharged gas which meets the requirements to atmosphere;
wherein the first-stage filtration unit (4) comprises: a water washing filtration unit (41), a hydrogen recombination unit (42), and a first-stage filtering container (43) for accommodating the water washing filtration unit (41) and the hydrogen recombination unit (42),
wherein the water washing filtration unit (41) is disposed at bottom of the first-stage filtering container (43) and comprises a water washing solution (411) and venturi nozzles (412) immersed in the water washing solution (411), and an input end of the venturi nozzle (412) passes through the first-stage filtering container (43) and connects to the discharging pipeline assembly (2) via a flange; and
the hydrogen recombination unit (42) is arranged on top of the first-stage filtering container (43), and comprises a baffle plate (421) and a catalyst (422) covered on the baffle plate (421).

2. The nuclear power plant containment filtering and discharging system according to claim 1, **characterized in that**, the discharging pipeline assembly (2) is provided with a control unit (3), and a first electric containment isolation valve (201) and a second electric containment isolation valve (202) provided on the discharging pipeline assembly (2) in series, and the control unit (3) is configured to remotely control opening and closing of the first electric containment isolation valve (201) and the second electric containment isolation valve (202) in serious accident.

3. The nuclear power plant containment filtering and discharging system according to claim 1, **characterized in that** the nuclear power plant containment filtering and discharging system further comprises a waste liquid reflux pipeline (7) connecting the discharging pipeline assembly (2) and the first-stage filtering unit (3), and the waste liquid reflux pipeline (7) is provided with a waste liquid reflux isolation valve (71) configured to control opening and closing of the waste liquid reflux isolation valve (71) under pressure equilibrium conditions, so that the waste liquid can flow back to the containment (1) through the waste liquid reflux pipeline (7) due to gravity.

4. The nuclear power plant containment filtering and discharging system according to claim 1, **characterized in that** the second-stage filtering unit (5) is an AgX passive dry filter arranged downstream of the hydrogen recombination unit (42) and configured to filter methyl iodide in the discharged gas subjected to hydrogen removal.

5. The nuclear power plant containment filtering and discharging system according to claim 1, **characterized in that**, the nuclear power plant containment filtration and discharge system further comprises a liquid replenishment loop (8) connected to the waste liquid reflux pipeline (7), the liquid replenishment loop (8) comprises a first check valve (81), a first fluid replenishment isolation valve (82) and a first quick connector (83), and the first check valve (81) and the first fluid replenishment isolation valve (82) are connected to a lowest water level detector (181) installed on the first-stage filtering container (43).

6. The nuclear power plant containment filtering and discharging system according to claim 5, **characterized in that**, the first check valve (81) and the first liquid replenishment isolation valve (82) cooperate with an interface valve (19) of a drug content detector installed on the first-stage filtering container (43).

7. The nuclear power plant containment filtering and discharging system according to claim 1, **characterized in that** the nuclear power plant containment filtering and discharging system further comprises a hydrophobic loop (9) connected to the waste liquid reflux pipeline (7), the hydrophobic loop (9) comprises a first hydrophobic isolation valve (91), a second hydrophobic isolation valve (92) and a second quick connector (93), and the first hydrophobic isolation valve (91) and the second hydrophobic isolation valve (92) are connected to a highest water level detector (182) provided on the first-stage filtering container (43).

8. The nuclear power plant containment filtering and discharging system according to claim 1, **characterized in that**, the nuclear power plant containment filtering and discharging system further comprises an orifice plate (10), a bursting membrane (11), a connecting element (12), a radiation monitor (13) and a chimney (14) sequentially arranged on the discharging pipeline assembly (2) and downstream of the second-stage filtering unit (5); the connecting element (12) has a large head end (122) and a small head end (121), the small end (121) is connected to the bursting membrane (11), and the large end (122) is connected to an input end of the radiation monitor (13); the input end of the radiation monitor (13) is connected to the large end (122), and an output end of the radiation monitor (13) is connected to the control unit (3).

9. The nuclear power plant containment filtering and discharging system according to claim 1, **characterized in that**, the nuclear power plant containment filtering and discharging system further comprises a nitrogen unit (15) connected to the first-stage filtering container (43), and the nitrogen unit (15) comprises a nitrogen loop (151), a nitrogen cylinder (152) arranged on the nitrogen loop (151), a nitrogen isolation valve (153) and a nitrogen check valve (154), and the nitrogen isolation valve (153) is connected to a pressure detector inside the first-stage filtering container (43).

10. The nuclear power plant containment filtering and discharging system according to claim 9, **characterized in that**, the nuclear power plant containment filtering and discharging system further comprises a balance valve (16) arranged on the discharging pipeline assembly (2), an input end of the balance valve (16) is connected to an output end of the second-stage filtering unit (5), and an output end of the balance valve (16) is connected to an input end of the orifice plate (10).

11. The nuclear power plant containment filtering and discharging system according to claim 10, **characterized in that** the nuclear power plant containment filtering and discharging system further comprises a safety valve (17) connected to two ends of the balance valve (16), and the safety valve (17) ) is connected to the pressure detector inside the first-stage filtering container (43).

12. A nuclear power plant containment filtering and discharging method employing the nuclear power plant containment filtering and discharging system of any one of claims 1 to 11, the nuclear power plant containment filtering and discharging method comprising the steps of:
controllably conveying the gas discharged from the containment (1) to the first-stage filtering unit (4) through the discharging pipeline assembly (2);
carrying out water washing filtration on the discharged gas in the first-stage filtering unit (4) and carrying out hydrogen removal on the discharged gas subjected to the water washing filtration; and
carrying out methyl iodide filtration on the discharged gas subjected to the hydrogen removal in the second-stage filtering unit (5), and discharging the filtered discharged gas which meets the requirements to the atmosphere.

## Patentansprüche

1. System zur Filtrierung und Entladung eines Kernkraftwerksicherheitsberhälters, das dazu konfiguriert ist, bei einem schweren Unfall entladenes Gas aus einem Sicherheitsbehälter (1) zu filtern, wobei das System zur Filtrierung und Entladung eines Kernkraftwerksicherheitsberhälters Folgendes umfasst:
einen Sicherheitsbehälter (1), eine Entladerohrleitungsbaugruppe (2) und eine Filtrierungseinheit (4) der ersten Stufe und eine Filtrierungseinheit (5) der zweiten Stufe, die an der Entladerohrleitungsbaugruppe (2) bereitgestellt sind; wobei ein Ende der Entladerohrleitungsbaugruppe (2) mit dem Sicherheitsbehälter (1) verbunden ist, um entladenes Gas in dem Sicherheitsbehälter (1) steuerbar zu der Filtrierungseinheit (4) der ersten Stufe zu befördern; wobei die Filtrierungseinheit (4) der ersten Stufe zum Ausführen einer Wasserwaschfiltration an dem entladenen Gas und zum Ausführen einer Wasserstoffentfernung an dem entladenen Gas, das der Wasserwaschfiltration unterzogen wurde, konfiguriert ist; wobei die Filtrierungseinheit (5) der zweiten Stufe in Reihe mit der Filtrierungseinheit (4) der ersten Stufe verbunden ist, um eine Methyljodidfiltration an dem entladenen Gas, das der Wasserstoffentfernung unterzogen wurde, auszuführen und das gefilterte entladene Gas, das die Anforderungen erfüllt, an die Atmosphäre zu entladen;
wobei die Filtrationseinheit (4) der ersten Stufe Folgendes umfasst: eine Wasserwaschfiltrationseinheit (41), eine Wasserstoffrekombinationseinheit (42) und ein Filtrierungsbehältnis (43) der ersten Stufe zum Aufnehmen der Wasserwaschfiltrationseinheit (41) und der Wasserstoffrekombinationseinheit (42),
wobei die Wasserwaschfiltrationseinheit (41) am Boden des Filtrierungsbehältnisses (43) der ersten Stufe vorgesehen ist und eine Wasserwaschlösung (411) und Venturi-Düsen (412) umfasst, die in die Wasserwaschlösung (411) eingetaucht sind, und ein Eingangsende der Venturi-Düse (412) durch das Filtrierungsbehältnis (43) der ersten Stufe verläuft und über einen Flansch mit der Entladerohrleitungsbaugruppe (2) verbunden ist; und
die Wasserstoffrekombinationseinheit (42) an der Oberseite des Filtrierungsbehältnisses (43) der ersten Stufe angeordnet ist und eine Prallplatte (421) und einen an der Prallplatte (421) abgedeckten Katalysator (422) umfasst.

2. System zur Filtrierung und Entladung eines Kernkraftwerksicherheitsberhälters nach Anspruch 1, **dadurch gekennzeichnet, dass** die Entladerohrleitungsbaugruppe (2) mit einer Steuereinheit (3) und einem ersten elektrischen Sicherheitsbehälterabsperrventil (201) und einem zweiten elektrischen Sicherheitsbehälterabsperrventil (202) bereitgestellt ist, die in Reihe an der Entladerohrleitungsbaugruppe (2) bereitgestellt sind, und die Steuereinheit (3) dazu konfiguriert ist, ein Öffnen und Schließen des ersten elektrischen Sicherheitsbehälterabsperrventils (201) und des zweiten elektrischen Sicherheitsbehälterabsperrventils (202) bei einem schweren Unfall fernzusteuern.

3. System zur Filtrierung und Entladung eines Kernkraftwerksicherheitsberhälters nach Anspruch 1, **dadurch gekennzeichnet, dass** das System zur Filtrierung und Entladung eines Kernkraftwerksicherheitsberhälters ferner eine Abfallflüssigkeitsrückflussrohrleitung (7) umfasst, welche die Entladerohrleitungsbaugruppe (2) und die Filtrierungseinheit (3) der ersten Stufe verbindet, und die Abfallflüssigkeitsrückflussrohrleitung (7) mit einem Abfallflüssigkeitsrückflussabsperrventil (71) bereitgestellt ist, das dazu konfiguriert ist, ein Öffnen und Schließen des Abfallflüssigkeitsrückflussabsperrventils (71) unter Druckgleichgewichtsbedingungen zu steuern, sodass die Abfallflüssigkeit aufgrund der Schwerkraft durch die Abfallflüssigkeitsrückflussrohrleitung (7) zurück zu dem Sicherheitsbehälter (1) strömen kann.

4. System zur Filtrierung und Entladung eines Kernkraftwerksicherheitsberhälters nach Anspruch 1, **dadurch gekennzeichnet, dass** die Filtrierungseinheit (5) der zweiten Stufe ein passiver AgX-Trockenfilter ist, der stromabwärts der Wasserstoffrekombinationseinheit (42) angeordnet und dazu konfiguriert ist, Methyliodid in dem entladenen Gas, das einer Wasserstoffentfernung unterzogen wurde, zu filtern.

5. System zur Filtrierung und Entladung eines Kernkraftwerksicherheitsberhälters nach Anspruch 1, **dadurch gekennzeichnet, dass** das System zur Filtration und Entladung eines Kernkraftwerksicherheitsberhälters ferner einen Flüssigkeitsnachfüllkreislauf (8) umfasst, der mit der Abfallflüssigkeitsrückflussrohrleitung (7) verbunden ist, der Flüssigkeitsnachfüllkreislauf (8) ein erstes Rückschlagventil (81), ein erstes Fluidnachfüllabsperrventil (82) und einen ersten Schnellverbinder (83) umfasst und das erste Rückschlagventil (81) und das erste Fluidnachfüllabsperrventil (82) mit einem Detektor (181) für den niedrigsten Wasserstand verbunden sind, der an dem Filtrierungsbehältnis (43) der ersten Stufe installiert ist.

6. System zur Filtrierung und Entladung eines Kernkraftwerksicherheitsberhälters nach Anspruch 5, **dadurch gekennzeichnet, dass** das erste Rückschlagventil (81) und das erste Flüssigkeitsnachfüllabsperrventil (82) mit einem Grenzflächenventil (19) eines Wirkstoffgehaltsdetektors zusammenwirken, der an dem Filtrierungsbehältnis (43) der ersten Stufe eingebaut ist.

7. System zur Filtrierung und Entladung eines Kernkraftwerksicherheitsberhälters nach Anspruch 1, **dadurch gekennzeichnet, dass** das System zur Filtrierung und Entladung eines Kernkraftwerksicherheitsberhälters ferner einen hydrophoben Kreislauf (9) umfasst, die mit der Abfallflüssigkeitsrückflussrohrleitung (7) verbunden ist, der hydrophobe Kreislauf (9) ein erstes hydrophobes Absperrventil (91), ein zweites hydrophobes Absperrventil (92) und einen zweiten Schnellverbinder (93) umfasst und das erste hydrophobe Absperrventil (91) und das zweite hydrophobe Absperrventil (92) mit einem Detektor (182) für den höchsten Wasserstand verbunden sind, der an dem Filtrierungsbehältnis (43) der ersten Stufe bereitgestellt ist.

8. System zur Filtrierung und Entladung eines Kernkraftwerksicherheitsberhälters nach Anspruch 1, **dadurch gekennzeichnet, dass** das System zur Filtrierung und Entladung eines Kernkraftwerksicherheitsberhälters ferner eine Lochplatte (10), eine Berstmembran (11), ein Verbindungselement (12), einen Strahlungsmonitor (13) und einen Kamin (14) umfasst, die aufeinanderfolgend an der Entladerohrleitungsbaugruppe (2) und stromabwärts der Filtrierungseinheit (5) der zweiten Stufe angeordnet sind; das Verbindungselement (12) ein großes Kopfende (122) und ein kleines Kopfende (121) aufweist, das kleine Ende (121) mit der Berstmembran (11) verbunden ist und das große Ende (122) mit einem Eingangsende des Strahlungsmonitors (13) verbunden ist; das Eingangsende des Strahlungsmonitors (13) mit dem großen Ende (122) verbunden ist und ein Ausgangsende des Strahlungsmonitors (13) mit der Steuereinheit (3) verbunden ist.

9. System zur Filtrierung und Entladung eines Kernkraftwerksicherheitsberhälters nach Anspruch 1, **dadurch gekennzeichnet, dass** das System zur Filtrierung und Entladung eines Kernkraftwerksicherheitsberhälters ferner eine Stickstoffeinheit (15) umfasst, die mit dem Filtrierungsbehältnis (43) der ersten Stufe verbunden ist, und die Stickstoffeinheit (15) einen Stickstoffkreislauf (151), einen Stickstoffzylinder (152), der an dem Stickstoffkreislauf (151) angeordnet ist, ein Stickstoffabsperrventil (153) und ein Stickstoffrückschlagventil (154) umfasst und das Stickstoffabsperrventil (153) mit einem Druckdetektor innerhalb des Filtrierungsbehältnisses (43) der ersten Stufe verbunden ist.

10. System zur Filtrierung und Entladung eines Kernkraftwerksicherheitsberhälters nach Anspruch 9, **dadurch gekennzeichnet, dass** das System zur Filtrierung und Entladung eines Kernkraftwerksicherheitsberhälters ferner ein Ausgleichsventil (16) umfasst, das an der Entladerohrleitungsbaugruppe (2) angeordnet ist, ein Eingangsende des Ausgleichsventils (16) mit einem Ausgangsende der Filtrierungseinheit (5) der zweiten Stufe verbunden ist und ein Ausgangsende des Ausgleichsventils (16) mit einem Eingangsende der Lochplatte (10) verbunden ist.

11. System zur Filtrierung und Entladung eines Kernkraftwerksicherheitsberhälters nach Anspruch 10, **dadurch gekennzeichnet, dass** das System zur Filtrierung und Entladung eines Kernkraftwerksicherheitsberhälters ferner ein Sicherungsventil (17) umfasst, das mit zwei Enden des Ausgleichsventils (16) verbunden ist, und das Sicherungsventil (17) mit dem Druckdetektor innerhalb des Filtrierungsbehältnisses (43) der ersten Stufe verbunden ist.

12. Verfahren zur Filtrierung und Entladung eines Kernkraftwerksicherheitsberhälters unter Verwendung des Systems zur Filtrierung und Entladung eines Kernkraftwerksicherheitsberhälters nach einem der Ansprüche 1 bis 11, wobei das Verfahren zur Filtrierung und Entladung eines Kernkraftwerksicherheitsberhälters die Folgenden Schritte umfasst:
steuerbares Befördern des aus dem Sicherheitsbehälter (1) entladenen Gases durch die Entladerohrleitungsbaugruppe (2) zu der Filtrierungseinheit (4) der ersten Stufe;
Ausführen einer Wasserwaschfiltration an dem entladenen Gas in der Filtrierungseinheit (4) der ersten Stufe und Ausführen einer Wasserstoffentfernung an dem entladenen Gas, das der Wasserwaschfiltration unterzogen wurde; und
Ausführen einer Methyliodidfiltration an dem entladenen Gas, das der Wasserstoffentfernung in der Filtrierungseinheit (5) der zweiten Stufe unterzogen wurde, und Entladen des gefilterten entladenen Gases, das die Anforderungen erfüllt, in die Atmosphäre.

## Revendications

1. Système de filtration et d'évacuation pour confinement de centrale nucléaire, conçu pour filtrer du gaz évacué à partir d'un confinement (1) en cas d'accident grave, le système de filtration et d'évacuation pour confinement de centrale nucléaire comprenant :
un confinement (1), un ensemble de conduite d'évacuation (2), et une unité de filtration de premier étage (4) et une unité de filtration de second étage (5) prévues sur l'ensemble de conduite d'évacuation (2) ; dans lequel une extrémité de l'ensemble de conduite d'évacuation (2) est reliée au confinement (1) pour transporter de manière commandée du gaz évacué dans le confinement (1) vers l'unité de filtration de premier étage (4) ; l'unité de filtration de premier étage (4) est conçue pour mettre en œuvre une filtration de lavage à l'eau sur le gaz évacué, et pour mettre en œuvre une élimination d'hydrogène sur le gaz évacué soumis à la filtration de lavage à l'eau ; l'unité de filtration de second étage (5) est reliée en série à l'unité de filtration de premier étage (4) pour mettre en œuvre une filtration d'iodure de méthyle sur le gaz évacué soumis à l'élimination d'hydrogène, et pour évacuer le gaz évacué filtré qui répond aux exigences dans l'atmosphère ;
dans lequel l'unité de filtration de premier étage (4) comprend : une unité de filtration de lavage à l'eau (41), une unité de recombinaison d'hydrogène (42) et un récipient de filtration de premier étage (43) pour recevoir l'unité de filtration de lavage à l'eau (41) et l'unité de recombinaison d'hydrogène (42),
dans lequel l'unité de filtration de lavage à l'eau (41) est disposée au fond du récipient de filtration de premier étage (43) et comprend une solution de lavage à l'eau (411) et des buses de venturi (412) immergées dans la solution de lavage à l'eau (411), et une extrémité d'entrée de la buse de venturi (412) passe à travers le récipient de filtration de premier étage (43) et se relie à l'ensemble de conduite d'évacuation (2) par l'intermédiaire d'une bride ; et
l'unité de recombinaison d'hydrogène (42) est agencée sur le dessus du récipient de filtration de premier étage (43), et comprend une plaque déflectrice (421) et un catalyseur (422) en couverture sur la plaque déflectrice (421).

2. Système de filtration et d'évacuation pour confinement de centrale nucléaire selon la revendication 1, **caractérisé en ce que** l'ensemble de conduite d'évacuation (2) est pourvu d'une unité de commande (3), et d'une première vanne d'isolement de confinement électrique (201) et d'une seconde vanne d'isolement de confinement électrique (202) prévues sur l'ensemble de conduite d'évacuation (2) en série, et l'unité de commande (3) est conçue pour commander à distance l'ouverture et la fermeture de la première vanne d'isolement de confinement électrique (201) et de la seconde vanne d'isolement de confinement électrique (202) en cas d'accident grave.

3. Système de filtration et d'évacuation pour confinement de centrale nucléaire selon la revendication 1, **caractérisé en ce que** le système de filtration et d'évacuation pour confinement de centrale nucléaire comprend en outre une conduite de reflux de liquide résiduaire (7) reliant l'ensemble de conduite d'évacuation (2) et l'unité de filtration de premier étage (3), et la conduite de reflux de liquide résiduaire (7) est pourvue d'une vanne d'isolement de reflux de liquide résiduaire (71) conçue pour commander l'ouverture et la fermeture de la vanne d'isolement de reflux de liquide résiduaire (71) dans des conditions d'équilibre de pression, de sorte que le liquide résiduaire peut refluer vers le confinement (1) à travers la conduite de reflux de liquide résiduaire (7) en raison de la gravité.

4. Système de filtration et d'évacuation pour confinement de centrale nucléaire selon la revendication 1, **caractérisé en ce que** l'unité de filtration de second étage (5) est un filtre sec passif AgX agencé en aval de l'unité de recombinaison d'hydrogène (42) et conçu pour filtrer de l'iodure de méthyle dans le gaz évacué soumis à l'élimination d'hydrogène.

5. Système de filtration et d'évacuation pour confinement de centrale nucléaire selon la revendication 1, **caractérisé en ce que** le système de filtration et d'évacuation pour confinement de centrale nucléaire comprend en outre une boucle de réapprovisionnement en liquide (8) reliée à la conduite de reflux de liquide résiduaire (7), la boucle de réapprovisionnement en liquide (8) comprend un premier clapet anti-retour (81), un premier clapet d'isolement de réapprovisionnement en fluide (82) et un premier raccord rapide (83), et le premier clapet anti-retour (81) et le premier clapet d'isolement de réapprovisionnement en fluide (82) sont reliés à un détecteur de niveau d'eau le plus bas (181) installé sur le récipient de filtration de premier étage (43).

6. Système de filtration et d'évacuation pour confinement de centrale nucléaire selon la revendication 5, **caractérisé en ce que** le premier clapet anti-retour (81) et le premier clapet d'isolement de réapprovisionnement de liquide (82) coopèrent avec une vanne d'interface (19) d'un détecteur de contenu de médicament installé sur le récipient de filtration de premier étage (43).

7. Système de filtration et d'évacuation pour confinement de centrale nucléaire selon la revendication 1, **caractérisé en ce que** le système de filtration et d'évacuation pour confinement de centrale nucléaire comprend en outre une boucle hydrophobe (9) reliée à la conduite de reflux de liquide résiduaire (7), la boucle hydrophobe (9) comprend une première vanne d'isolement hydrophobe (91), une seconde vanne d'isolement hydrophobe (92) et un second raccord rapide (93), et la première vanne d'isolement hydrophobe (91) et la seconde vanne d'isolement hydrophobe (92) sont reliées à un détecteur de niveau d'eau le plus élevé (182) prévu sur le récipient de filtration de premier étage (43).

8. Système de filtration et d'évacuation pour confinement de centrale nucléaire selon la revendication 1, **caractérisé en ce que** le système de filtration et d'évacuation pour confinement de centrale nucléaire comprend en outre une plaque à orifices (10), une membrane d'éclatement (11), un élément de liaison (12), un moniteur de rayonnement (13) et une cheminée (14) agencés séquentiellement sur l'ensemble de conduite d'évacuation (2) et en aval de l'unité de filtration de second étage (5) ; l'élément de liaison (12) comporte une grande extrémité (122) de tête et une petite extrémité (121) de tête, la petite extrémité (121) est reliée à la membrane d'éclatement (11), et la grande extrémité (122) est reliée à une extrémité d'entrée du moniteur de rayonnement (13) ; l'extrémité d'entrée du moniteur de rayonnement (13) est reliée à la grande extrémité (122), et une extrémité de sortie du moniteur de rayonnement (13) est reliée à l'unité de commande (3).

9. Système de filtration et d'évacuation pour confinement de centrale nucléaire selon la revendication 1, **caractérisé en ce que** le système de filtration et d'évacuation pour confinement de centrale nucléaire comprend en outre une unité d'azote (15) reliée au récipient de filtration de premier étage (43), et l'unité d'azote (15) comprend une boucle d'azote (151), une bouteille d'azote (152) disposée sur la boucle d'azote (151), une vanne d'isolement d'azote (153) et un clapet anti-retour d'azote (154), et la vanne d'isolement d'azote (153) est reliée à un détecteur de pression à l'intérieur du récipient de filtration de premier étage (43).

10. Système de filtration et d'évacuation pour confinement de centrale nucléaire selon la revendication 9, **caractérisé en ce que** le système de filtration et d'évacuation pour confinement de centrale nucléaire comprend en outre une vanne d'équilibrage (16) agencée sur l'ensemble de conduite d'évacuation (2), une extrémité d'entrée de la vanne d'équilibrage (16) est reliée à une extrémité de sortie de l'unité de filtration de second étage (5), et une extrémité de sortie de la vanne d'équilibrage (16) est reliée à une extrémité d'entrée de la plaque à orifices (10).

11. Système de filtration et d'évacuation pour confinement de centrale nucléaire selon la revendication 10, **caractérisé en ce que** le système de filtration et d'évacuation pour confinement de centrale nucléaire comprend en outre une vanne de sécurité (17) reliée à deux extrémités de la vanne d'équilibrage (16), et la vanne de sécurité (17) est reliée au détecteur de pression à l'intérieur du récipient de filtration de premier étage (43).

12. Procédé de filtration et d'évacuation pour confinement de centrale nucléaire employant le système de filtration et d'évacuation pour confinement de centrale nucléaire de l'une quelconque des revendications 1 à 11, le procédé de filtration et d'évacuation pour confinement de centrale nucléaire comprenant les étapes suivantes :
le transport de manière commandée le gaz évacué à partir du confinement (1) vers l'unité de filtration de premier étage (4) à travers l'ensemble de conduite d'évacuation (2) ;
la mise en œuvre d'une filtration de lavage à l'eau sur le gaz évacué dans l'unité de filtration de premier étage (4) et la mise en œuvre d'une élimination d'hydrogène sur le gaz évacué soumis à la filtration de lavage à l'eau ; et la mise en œuvre d'une filtration d'iodure de méthyle sur le gaz évacué soumis à l'élimination d'hydrogène dans l'unité de filtration de second étage (5), et l'évacuation du gaz évacué filtré qui répond aux exigences dans l'atmosphère.
